# EUROPEAN PATENT APPLICATION

(11) **EP 4 836 047 A1**
(43) Date of publication of application: **04.11.2026**
(21) Application number: 25913482.3
(22) Date of filing: 12.12.2025
(51) Int. Cl.: H01M 10/04, H01M 10/0583

(54) **ELECTRODE ASSEMBLY, AND ELECTRODE ASSEMBLY MANUFACTURING DEVICE AND METHOD**

(30) Priority: 23.12.2024 KR 20240194742
(71) Applicant: LG Energy Solution, Ltd., Seoul 07335 (KR)
(72) Inventor: HONG, Hyeonaug, Daejeon 34122 (KR)
(74) Representative: Goddar, Heinz J.
(86) International application number: PCT/KR2025/021516
(87) International publication number: WO 2026/142092

(57) **Abstract**

Provided is an apparatus for manufacturing an electrode assembly in which a first electrode and a second electrode are stacked between each pair of adjacent layers of a separator that is continuously supplied and folded in a zigzag manner at opposite sides in a width direction. The apparatus includes: a first gripper configured to convey and stack the first electrode onto the separator in a state in which a first folding portion is formed on the separator. The first gripper includes a first punching unit protruding in the width direction and configured to punch one or more first holes arranged in a front-rear direction in the first folding portion.

## Description

### TECHNICAL FIELD

This application is based on and claims priority from Korean Patent Application No. 10-2024-0194742, filed on December 23, 2024, with the Korean Intellectual Property Office, the disclosure of which is incorporated herein in its entirety by reference.

The present disclosure relates to an apparatus and method for manufacturing an electrode assembly, and to the electrode assembly.

### BACKGROUND

Secondary batteries having high applicability according to the product groups and electrical characteristics such as high energy density are generally applied not only to the portable devices but also to, for example, electric vehicles (EVs) or hybrid electric vehicles (HEVs) driven by electric power sources.

These secondary batteries not only have the primary advantage of dramatically reducing the use of fossil fuels, but also not generating any by-products during energy use. Therefore, secondary batteries are attracting attention as a new energy source to improve eco-friendliness and energy efficiency.

Among the secondary batteries, for example, lithium-ion batteries, lithium polymer batteries, nickel-cadmium batteries, nickel-metal hydride batteries, and nickel-zinc batteries are widely used types of secondary batteries. The operating voltage of such unit secondary battery cells is about 2.5 V to 4.5 V. Accordingly, when a higher output voltage is required, a battery pack may be configured by connecting multiple battery cells in series. In addition, a battery pack may be configured by connecting multiple battery cells in parallel depending on the charging and discharging capacity required for the battery pack. Therefore, the number of battery cells included in the battery pack and the form of electrical connection thereof may be set in various ways depending on the required output voltage and/or charging and discharging capacity.

### SUMMARY

### Technical Problem

The present disclosure provides an apparatus and method for manufacturing an electrode assembly with improved lifespan and performance and reduced risk of explosion or ignition.

The apparatus and method for manufacturing an electrode assembly according to the present disclosure are configured to manufacture an electrode assembly in which side reactions such as lithium deposition may be suppressed.

The present disclosure provides an apparatus and method for manufacturing an electrode assembly configured such that an air pocket is not generated in a folding portion of a separator in the course of manufacturing the electrode assembly.

The technical features of the present disclosure are not limited to those mentioned above, and other uses and advantages of the present disclosure that have not been mentioned may be understood from the following description and may be more clearly understood based on the embodiments of the present disclosure. In addition, it may be readily understood that the uses and advantages of the present disclosure may be implemented by the features set forth in the claims and combinations thereof.

### Technical Solution

The present disclosure provides an apparatus for manufacturing an electrode assembly in which a first electrode and a second electrode are stacked between each pair of adjacent layers of a separator that is continuously supplied and folded in a zigzag manner at opposite sides in a width direction.

According to an embodiment of the present disclosure, the electrode assembly manufacturing apparatus includes a first gripper configured to convey and stack the first electrode onto the separator in a state in which a first folding portion is formed on a side of the separator in a first width direction. The first gripper includes a first punching unit protruding in the first width direction and configured to punch one or more first holes arranged in a front-rear direction in the first folding portion.

The electrode assembly manufacturing apparatus may be used to perform an electrode assembly manufacturing method to be described later, but may also be used to perform a similar or completely different process.

The electrode assembly manufacturing apparatus may further include a second gripper configured to alternately operate with the first gripper, to convey and stack the second electrode onto the separator in a state in which a second folding portion is formed on a side of the separator in a second width direction. The second gripper includes a second punching unit protruding in the second width direction and configured to punch one or more second holes arranged in the front-rear direction in the second folding portion.

According to an embodiment, the electrode assembly manufacturing apparatus may include a second gripper that is arranged to be symmetrical to the first gripper and driven symmetrically. In this case, configurations added to the first gripper according to the following description are also symmetrically added to the second gripper as they are, so that the electrode assembly manufacturing apparatus may have an approximately and substantially symmetrical structure.

According to an embodiment, the first gripper may be driven to move from a first position at a side of the first folding portion in the second width direction to a second position where the first electrode is disposed, along the width direction. For example, the first gripper may be configured to grip the first electrode at the first position and to release the grip on the first electrode as well as to punch the one or more first holes in the first folding portion at the second position.

The first gripper according to an embodiment may be driven to move from a first position to a second position in a state in which the first punching unit protrudes, and the one or more first holes may be punched as the first gripper moves in a direction approaching the first folding portion. In other words, as the first gripper moves in the first width direction to convey the first electrode, the first punching unit may also move in the first width direction, penetrate the first folding portion, and punch the one or more first holes.

When the one or more first holes are punched along the width direction in this manner, the one or more first holes may be punched at an end portion of the first folding portion, where the air pocket is most likely to be trapped. Therefore, the air pocket may be more effectively removed.

According to another modification, the first gripper may be driven to move from the first position to the second position in a state in which the first punching unit is not protruding or is less protruded, and the one or more first holes may be punched as the first punching unit further protrudes in the first width direction after the first gripper has moved to the second position. In this case, during the movement of the first gripper for conveying the first electrode, the punching of the one or more first holes does not occur, and only after the first gripper is placed at the second position, the first punching unit may further protrude and punch the one or more first holes.

According to another modification, the first gripper may be driven to move from the first position to the second position in a state in which the first punching unit is not protruding or is less protruded, and the one or more first holes may be punched as the first punching unit further protrudes in a height direction after the first gripper has moved to the second position. For example, the one or more first holes do not necessarily need to be punched along the width direction. Rather, when the one or more first holes are punched along the height direction, since the air pocket, which has a lower density than the electrolyte, tends to rise, the air pocket may more easily escape from the first folding portion.

In this case, since the orientation in which the electrode assembly is mounted with respect to the gravity direction after actual manufacturing may vary depending on the situation, the one or more first holes may be punched not only at an upper side of the first folding portion but also at a lower side or at both the upper and lower sides.

According to another modification, the first gripper may be driven to move from the first position at a front side or a rear side of the first folding portion to the second position where the first electrode is disposed, along a front-rear direction. That is, the first gripper does not necessarily need to be driven to move along the width direction, but may be driven to move along the front-rear direction.

In this case, the first gripper may be driven to move from the first position to the second position in a state in which the first punching unit is not protruding or is less protruded so as not to interfere with the separator, and the one or more first holes may be punched as the first punching unit further protrudes in the first width direction after the first gripper has moved to the second position.

In this case as well, the one or more first holes may be punched as the first punching unit further protrudes in a height direction after the first gripper has moved to the second position, and in this case, the one or more first holes may be punched not only at an upper side of the first folding portion but also at a lower side or at both the upper and lower sides.

The first punching unit may have various shapes to punch the one or more first holes by penetrating the first folding portion.

For example, the first punching unit may have a needle shape, and the needle-shaped first punching unit may form the one or more pinhole-shaped first holes in the first folding portion.

Alternatively, for example, the first punching unit may have a blade shape, and the blade-shaped first punching unit may form the one or more slit-shaped first holes extending in the front-rear direction in the first folding portion.

However, the first punching unit may have various other structures, such as a heating unit configured to melt and punch the first folding portion, in addition to the shapes thereof.

The electrode assembly manufacturing apparatus may further include a pair of heat-pressing units configured to heat-press the electrode assembly in a height direction in a predetermined pressing area on a plane of the electrode assembly after stacking of the first electrode and the second electrode is completed. The heat-pressing units may be provided to improve structural stability of the electrode assembly, increase efficiency of an electrochemical reaction, increase energy density, and suppress generation of an air pocket by improving impregnation of the electrolyte, by pressing and fixing the first electrode, the second electrode, and the separator together in a stacking direction.

In this case, a fusible binder may be applied to surfaces of the first electrode, the second electrode, and/or the separator so that the first electrode, the second electrode, and/or the separator may be fixedly fusion-bonded to one another by the heat-pressing action of the heat-pressing units.

The pressing area may be set to avoid the one or more first holes. This is because, when the pressing area is formed in a region where the one or more first holes are formed, the one or more first holes may become narrowed, or may even be blocked due to fusion-bonding between layers of the separator.

According to an embodiment, the pressing area may include a plurality of unit pressing areas extending in the width direction and arranged at intervals in the front-rear direction, and each of the one or more first holes may be interposed in the front-rear direction between each pair of adjacent unit pressing areas. In other words, the pressing area may be formed in a stripe pattern arranged in the front-rear direction.

According to a modification, one or more non-pressing areas having a shape surrounded by a closed curve may be provided inside the pressing area. At this time, the one or more first holes may be located within the one or more non-pressing areas, respectively.

The present disclosure also provides a method for manufacturing an electrode assembly by stacking a first electrode and a second electrode between each pair of adjacent layers of a separator that is continuously supplied and folded in a zigzag manner at opposite sides in a width direction.

The electrode assembly manufacturing method includes a stacking step that repeatedly performs the following steps: a first folding step of forming a first folding portion at a side of the separator in a first width direction; a first stacking and punching step of conveying and stacking the first electrode onto the separator by a first gripper, and punching a first hole in the first folding portion by a first punching unit protruding from the first gripper; a second folding step of forming a second folding portion at a side of the separator in a second width direction; a second stacking and punching step of conveying and stacking the second electrode onto the separator by a second gripper, and punching a second hole in the second folding portion by a second punching unit protruding from the second gripper.

The electrode assembly manufacturing method may be performed by the above-described electrode assembly manufacturing apparatus, but may also be performed by an apparatus having a similar or completely different structure.

According to an embodiment, in at least one of the first stacking and punching step and the second stacking and punching step, stacking and punching may be performed simultaneously.

According to another modification, in at least one of the first stacking and punching step and the second stacking and punching step, punching may be performed after stacking.

The electrode assembly manufacturing method may further include a heat-pressing step of heat-pressing the stacked electrode assembly in a height direction in a predetermined pressing area on a plane of the electrode assembly after the stacking step. At this time, the pressing area may be set to avoid the first hole and the second hole.

According to the present disclosure, as the first hole is formed, an electrolyte may easily penetrate into the first folding portion, and air may easily escape, so that an electrode assembly in which formation of an air pocket in the first folding portion is suppressed may be manufactured. Furthermore, according to the present disclosure, as the first gripper forms the first hole from an inner side of the first folding portion, accurate punching may be performed at an end portion of the first folding portion, which is bent and thus not easy to punch accurately, and burrs that may be formed by the punching may be formed toward an outer side. Therefore, air may escape more easily and a reaction force may be provided due to tension applied to the separator during a supplying process of the separator, enabling stable punching.

Another embodiment of the present disclosure provides an electrode assembly in which a first electrode and a second electrode are stacked between each pair of adjacent layers of a separator folded in a zigzag manner. The electrode assembly includes one or more first holes arranged in a front-rear direction in a first folding portion formed at a side of the separator in a first width direction, and one or more second holes arranged in the front-rear direction in a second folding portion formed at a side of the separator in a second width direction.

The first electrode is a positive electrode, and the second electrode is a negative electrode.

### Advantageous Effects

The present disclosure may provide an apparatus and method for manufacturing an electrode assembly with improved lifespan and performance and reduced risk of explosion or ignition, and may also provide the electrode assembly.

The apparatus and method for manufacturing an electrode assembly according to the present disclosure may be used to manufacture an electrode assembly in which side reactions such as lithium deposition may be suppressed.

The present disclosure may provide an electrode assembly manufacturing apparatus and method configured such that an air pocket is not generated in a folding portion of a separator in the course of manufacturing the electrode assembly.

In addition, the present disclosure may have various other effects, which will be described in each embodiment, or the description of effects that can be readily inferred by those ordinarily skilled in the art will be omitted.

### BRIEF DESCRIPTION OF THE DRAWINGS

FIG. 1 illustrates a cross-section of a battery cell.
FIG. 2 illustrates a state in which an air pocket is generated in the battery cell of FIG. 1 and lithium is deposited.
FIG. 3 illustrates a cross-section of a battery cell including an electrode assembly after completion of a stacking step according to an embodiment.
FIG. 4 illustrates an electrode assembly manufacturing apparatus according to an embodiment.
FIG. 5 illustrates an electrode assembly manufacturing method according to an embodiment.
FIGS. 6 to 11 illustrate a stacking step according to an embodiment.
FIGS. 12 to 14 illustrate a stacking and punching step according to a modification.
FIG. 15 illustrates a heat-pressing step according to an embodiment.
FIG. 16 illustrates a gripper according to an embodiment.
FIG. 17 illustrates a top view of an electrode assembly after completion of a stacking step according to an embodiment.
FIG. 18 illustrates a pressing area according to an embodiment.
FIG. 19 illustrates a gripper according to a modification.
FIG. 20 illustrates a top view of an electrode assembly after completion of a stacking step according to a modification.
FIG. 21 illustrates a pressing area according to a modification.

In some of the accompanying drawings, corresponding components are given the same reference numerals. A person ordinarily skilled in the art would appreciate that the drawings illustrate elements simply and clearly and are not necessarily drawn to scale. In addition, elements that are useful or essential in commercially implementable embodiments but are known in the art may often not be described in order to avoid impeding the understanding of the spirit of various embodiments of the present disclosure.

### DETAILED DESCRIPTION

The above-described objects, features, and advantages will be described in detail with reference to the accompanying drawings, so that those ordinarily skilled in the art to which the present disclosure pertains may readily implement the technical idea of the present disclosure. In describing the present disclosure, detailed descriptions of well-known technologies related to the present disclosure will be omitted when it is determined that such descriptions may unnecessarily obscure the gist of the present disclosure. Hereinafter, embodiments according to the present disclosure will be described in detail with reference to the accompanying drawings. In the drawings, like reference numerals are used to designate identical or similar components.

Although the terms such as first and second are used in order to describe various elements, the components are, of course, not limited by these terms. These terms are only used to distinguish one component from another component, and the first component may, of course, be the second component unless specifically stated otherwise.

Throughout the specification, unless specifically stated otherwise, each component may be singular or plural.

Hereinafter, when an arbitrary component is described as being disposed at the "top (or bottom)" of a component or "above (or below)" the component, it may mean that the arbitrary component is disposed in contact with the top surface (or bottom surface) of the component, as well as that another component may be interposed between the component and the arbitrary component disposed above (or below) the component.

In addition, when an arbitrary component is described as being "connected," "coupled," or "joined" to another component, it should be understood that the components may be directly connected or joined to each other, but another component may be "interposed" between individual components or the individual components may be "connected," "coupled," or "joined" to each other via another component.

The singular forms used in the present specification include the plural forms unless the context clearly indicates otherwise. In the present application, the term "comprising," "including," or the like should not be construed to mean that various constituent elements or steps described in the specification are necessarily included. It should be interpreted that some of the constituent elements or some steps may not be included, or that additional constituent elements or steps may be further included.

Throughout the description, when referred to as "A and/or B," this means A, B, or A and B unless specifically stated otherwise, and when referred to as "C to D," this means C or greater and D or less unless specifically stated otherwise.

As types of unit secondary battery cells, cylindrical, prismatic, and pouch-type battery cells are known depending on the shape of the cell case used. Among these, the pouch-type battery cell generally accommodates a stack-type electrode assembly in which separators and electrodes are alternately stacked. Recently, among the methods of manufacturing such a stack-type electrode assembly, a zigzag stacking method has been used in which a separator is folded in a zigzag manner and electrodes are inserted between each pair of adjacent layers.

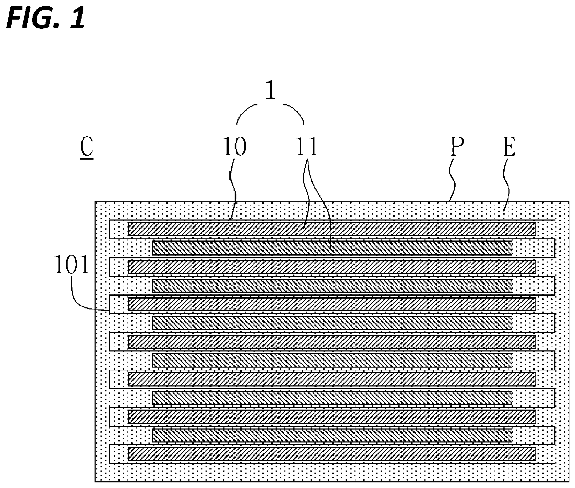

FIG. 1 illustrates a cross-section of a battery cell. Referring thereto, an electrode assembly 1 manufactured by a zigzag stacking method includes a separator 10 folded in a zigzag manner with folding portions 101 formed at opposite sides in a width direction, and electrodes 11 stacked between each pair of adjacent layers of the separator 10. The electrode assembly 1 is accommodated in a pouch P filled with an electrolyte E to constitute a battery cell C.

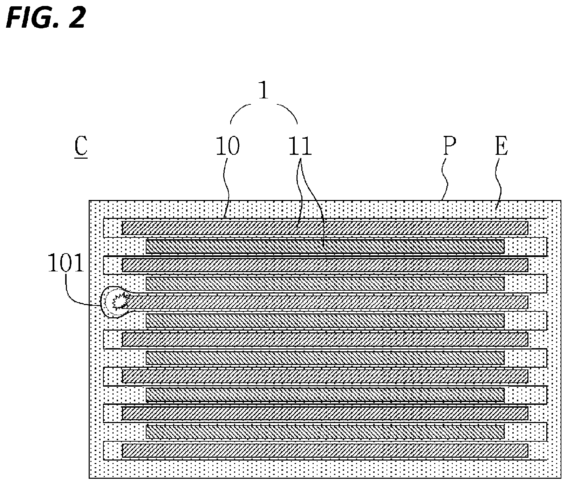

FIG. 2 illustrates a state in which an air pocket is generated in the battery cell C of FIG. 1 and lithium is deposited. Referring thereto, in the electrode assembly 1 having the above-described structure, since the separator 10 forms the folding portions 101, an air pocket may be generated due to failure of the electrolyte E to penetrate into the folding portions 101 or due to air being trapped therein. As a result, a portion of a surface of an electrode 11 may be exposed to the air pocket. Due to heat generated during charging and discharging of the electrode 11 and electrochemical reactions of the battery, there is a risk that lithium dissolved in the electrolyte E may be deposited in the area of the air pocket. When such side reactions, such as the above-described lithium deposition, excessively occur, problems may arise in the battery cell C in terms of lifespan, performance, and risk management of explosion or ignition, for example, the separator 10 or the electrode 11 may be damaged by sharp crystals, or different polarity electrodes 11 may be short-circuited by being electrically connected to each other.

In view of the above, the present disclosure provides an apparatus and method for manufacturing an electrode assembly which is configured such that an air pocket is not generated in folding portions of a separator during manufacture of the electrode assembly, thereby providing an electrode assembly with improved lifespan and performance and reduced risk of explosion or ignition, and an apparatus and method for manufacturing such an electrode assembly.

Hereinafter, embodiments of the present disclosure will be described with reference to the accompanying drawings.

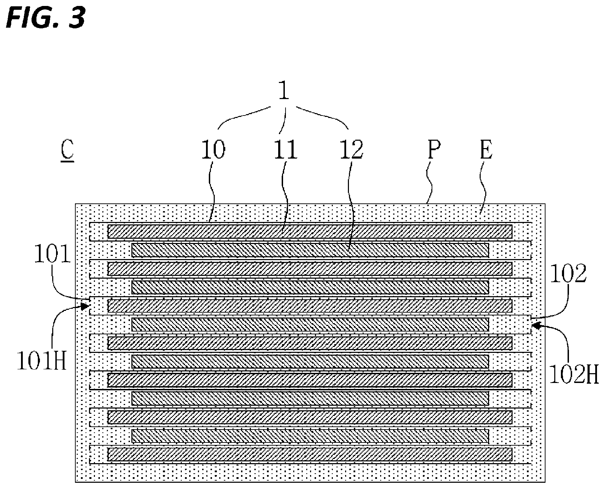

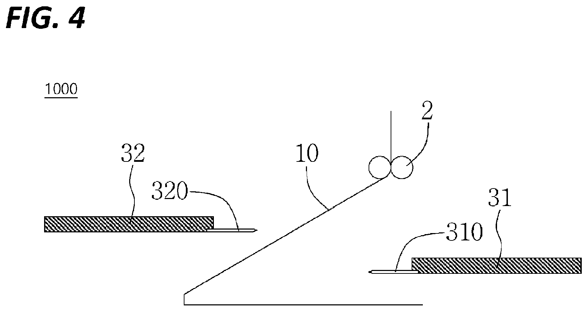

FIG. 3 illustrates a cross-section of a battery cell C including an electrode assembly 1 after completion of a stacking step according to an embodiment. FIG. 4 illustrates an electrode assembly manufacturing apparatus according to an embodiment. Referring to these drawings, the present disclosure relates to an apparatus and method for manufacturing an electrode assembly 1 in which a first electrode 11 and a second electrode 12 are stacked between each pair of adjacent layers of a separator 10 that is continuously supplied and folded in a zigzag manner at both sides in a width direction.

Referring to FIG. 3, the electrode assembly 1 according to an embodiment of the present disclosure includes first electrodes 11 and second electrodes 12 stacked on a separator 10 formed in a zigzag manner. According to an embodiment, the first electrodes 11 may be positive electrodes, and the second electrodes 12 may be negative electrodes. As the first holes 101H and the second holes 102H are respectively formed in the folding portions 101 and 102 formed in the separator 10, the electrolyte E may easily penetrate into the first folding portions 101 and/or the second folding portions 102, and even if air pockets are formed inside the first folding portions 101 and/or the second folding portions 102, the air may easily escape. As a result, an electrode assembly 1 in which formation of air pockets in the first folding portions 101 and/or the second folding portions 102 is suppressed may be manufactured.

Referring to FIG. 4, an electrode assembly manufacturing apparatus 1000 according to an embodiment of the present disclosure may include a supply unit 2 configured to reciprocally move along a width direction relative to a first end of a separator 10 fixed for continuous supply and zigzag folding of the separator 10. In this case, regardless of whether or not the supply unit 2 as described above is provided, a predetermined range of tension may be applied to the separator 10 for stable supply and folding.

The electrode assembly manufacturing apparatus 1000 according to an embodiment may include: a first gripper 31 configured to convey and stack a first electrode 11 onto the separator 10 in a state in which a first folding portion 101 is formed at side of the separator 10 in a first width direction, the first gripper 31 including a first punching unit 310 protruding in the first width direction to punch one or more first holes 101H arranged in a front-rear direction in the first folding portion 101; and a second gripper 32 configured to operate alternately with the first gripper 31, to convey a second electrode 12 and to stack the second electrode 12 on the separator 10 in a state in which a second folding portion 102 is formed at a side of the separator 10 in a second width direction, the second gripper 32 including a second punching unit 320 protruding in the second width direction to punch one or more second holes 102H arranged in a front-rear direction in the second folding portion 102.

According to an embodiment, the second gripper 32 may be arranged to be symmetrical with the first gripper 31 and may be driven symmetrically. In this case, configurations added to the first gripper 31 according to the description below are also symmetrically added to the second gripper 32 as they are, so that the electrode assembly manufacturing apparatus may have an approximately and substantially symmetrical structure.

The electrode assembly manufacturing apparatus 1000 may be used to perform an electrode assembly manufacturing method to be described later, but may also be used to perform a similar or completely different process.

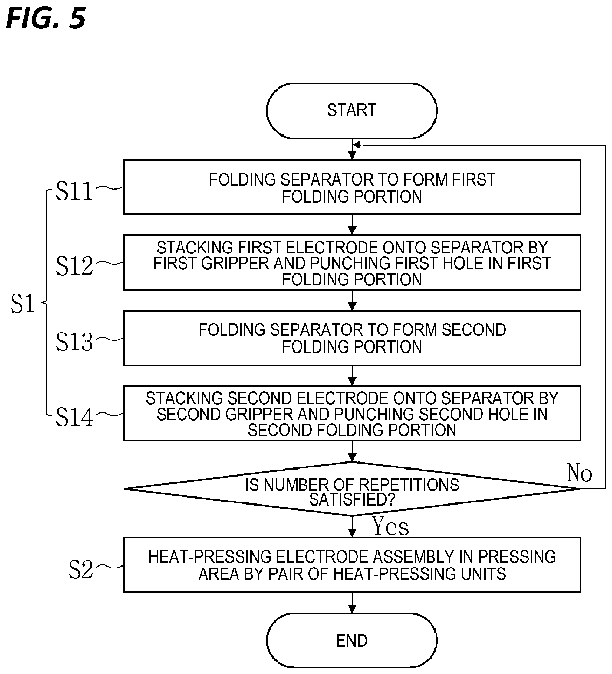

FIG. 5 illustrates an electrode assembly manufacturing method according to an embodiment. Referring thereto, the electrode assembly manufacturing method according to an embodiment includes: a first folding step S11 of forming a first folding portion 101 at a side of a separator 10 in a first width direction; a first stacking and punching step S12 of conveying and stacking a first electrode 11 onto the separator 10 by a first gripper 31 and punching a first hole 101H in the first folding portion 101 by a first punching unit 310 protruding from the first gripper 31; a second folding step S13 of forming a second folding portion 102 at a side of the separator 10 in a second width direction; a second stacking and punching step S14 of conveying and stacking a second electrode 12 onto the separator 10 by a second gripper 32 and punching a second hole 102H in the second folding portion 102 by a second punching unit 320 protruding from the second gripper 32; and a stacking step S1 of repeatedly performing the first folding step, the first stacking and punching step, the second folding step, and the second stacking and punching step.

The electrode assembly manufacturing method may be performed by the above-described electrode assembly manufacturing apparatus, but may also be performed by an apparatus having a similar or completely different structure.

Referring again to FIG. 5, in at least one of the first stacking and punching step S12 and the second stacking and punching step S14 according to an embodiment, stacking and punching may be performed simultaneously.

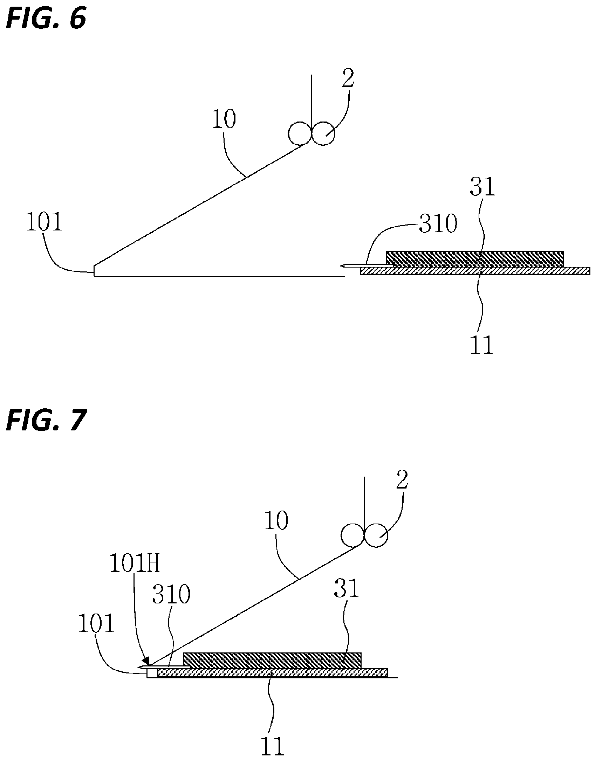

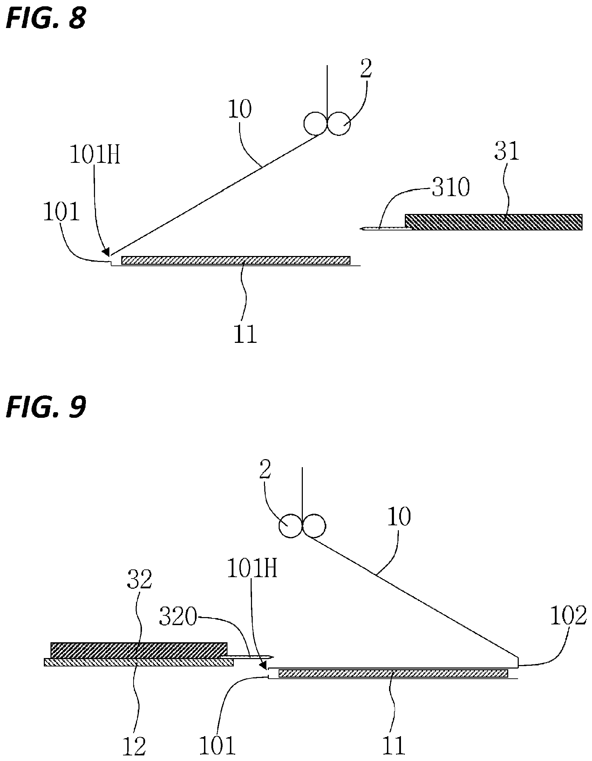

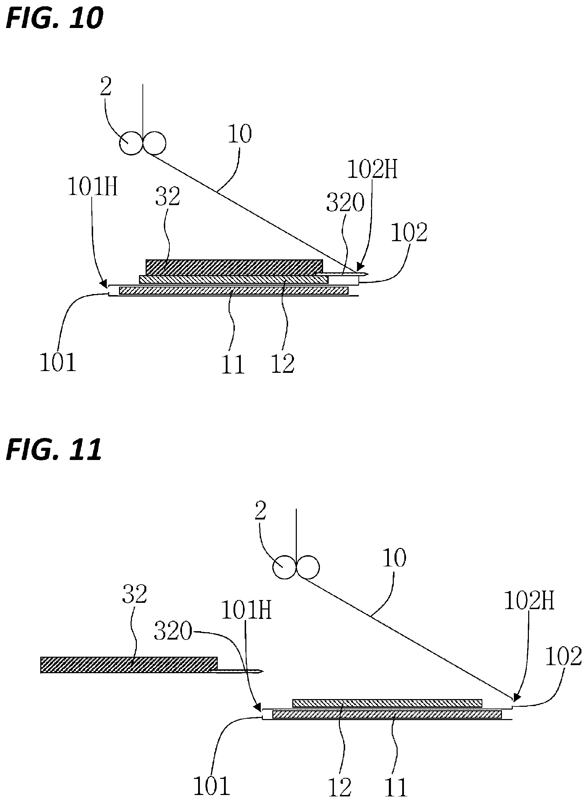

FIGS. 6 to 11 illustrate a stacking step according to an embodiment. FIG. 6 illustrates the first folding step S11 according to an embodiment, FIGS. 7 and 8 illustrate the first stacking and punching step S12 according to an embodiment, FIG. 9 illustrates the second folding step S13 according to an embodiment, and FIGS. 10 and 11 illustrate the second stacking and punching step S14 according to an embodiment.

Referring to FIGS. 6 to 8, the first gripper 31 may be driven to move along the width direction from the first position at a side of the first folding portion 101 in the second width direction to the second position where the first electrode 11 is disposed. For example, the first gripper 31 may be configured to grip the first electrode 11 at the first position and to release the grip on the first electrode 11 as well as to punch the first hole 101H in the first folding portion 101 at the second position.

The first gripper 31 according to an embodiment may be driven to move from the first position to the second position in a state in which the first punching unit 310 protrudes, and the first hole 101H may be punched as the first gripper 31 moves in a direction approaching the first folding portion 101. In other words, as the first gripper 31 moves in the first width direction to convey the first electrode 11, the first punching unit 310 may also move in the first width direction, penetrate through the first folding portion 101, and punch the first hole 101H.

According to an embodiment, when the first gripper 31 is placed at the first position, the first folding step S11 may be performed, and when the first gripper 31 is placed at the second position or as the first gripper 31 is moved to the second position, the first stacking and punching step S12 may be performed.

Similarly, referring to FIGS. 9 to 11, the second gripper 32 may be driven to move along the width direction from the first position at a side of the second folding portion 102 in the second width direction to the second position where the second electrode 12 is disposed. For example, the second gripper 32 may be configured to grip the second electrode 12 at the first position and to release the grip on the second electrode 12 as well as to punch the second hole 102H in the second folding portion 102 at the second position.

The second gripper 32 according to an embodiment may be driven to move from the first position to the second position in a state in which the second punching unit 320 protrudes, and the second hole 102H may be punched as the second gripper 32 moves in a direction approaching the second folding portion 102. In other words, as the second gripper 32 moves in the second width direction to convey the second electrode 12, the second punching unit 320 may also move in the second width direction, penetrate through the second folding portion 102, and punch the second hole 102H.

According to an embodiment, when the second gripper 32 is placed at the first position, the second folding step S13 may be performed, and when the second gripper 32 is placed at the second position or as the second gripper 32 is moved to the second position, the second stacking and punching step S14 may be performed.

When the first hole 101H and/or the second hole 102H are punched along the width direction as described above, the first hole 101H and/or the second hole 102H may be punched at end portions of the first folding portion 101 and/or the second folding portion 102, in which the air pocket is most likely to be trapped, so that the air pocket may be more effectively removed.

Referring back to FIG. 5, in at least one of the first stacking and punching step S12 and the second stacking and punching step S14 according to a modification, punching may be performed after stacking.

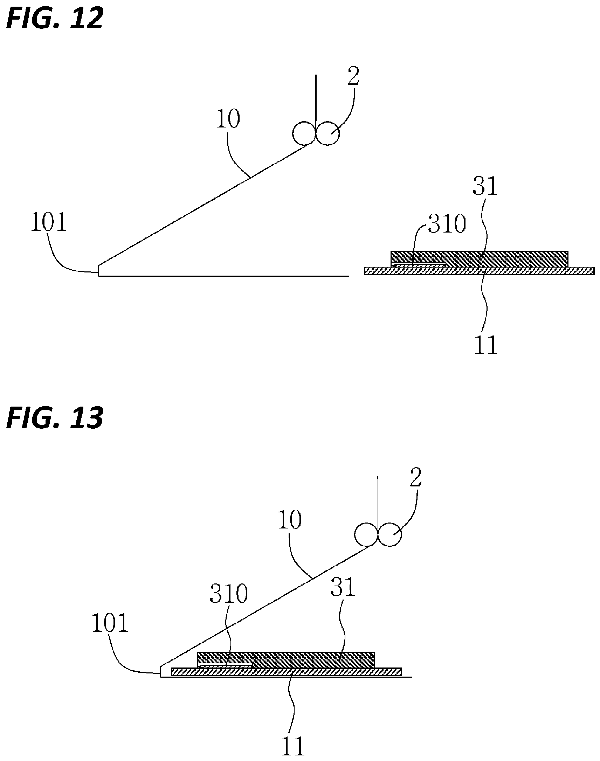

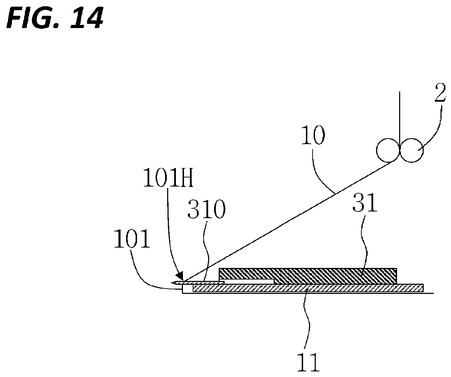

FIGS. 12 to 14 illustrate a stacking and punching step according to a modification. FIG. 12 may illustrate a first folding step S11 according to a modification, and FIGS. 13 and 14 may illustrate a first stacking and punching step S12 according to a modification.

Referring to these drawings, the first gripper 31 may be driven to move along the width direction from the first position at a side of the first folding portion 101 in the second width direction to the second position where the first electrode 11 is disposed. For example, the first gripper 31 may be configured to grip the first electrode 11 at the first position and to release the grip on the first electrode 11 as well as to punch the first hole 101H in the first folding portion 101 at the second position.

According to a modification, in this case, the first gripper 31 may be driven to move from the first position to the second position in a state in which the first punching unit 310 is not protruding or is less protruded, and the first hole 101H may be punched as the first punching unit 310 further protrudes in the first width direction after the first gripper 31 has moved to the second position. In this case, during the process in which the first gripper 31 moves to convey the first electrode 11, punching of the first hole 101H does not occur, and only after the first gripper 31 is placed at the second position, the first punching unit 310 may further protrude and punch the first hole 101H.

According to another modification not illustrated, the first gripper 31 is driven to move from the first position to the second position in a state in which the first punching unit 310 is not protruding or is less protruded, and the first hole 101H may be punched as the first punching unit 310 further protrudes in the height direction after the first gripper 31 has moved to the second position. That is, the first hole 101H does not necessarily need to be punched along the width direction. Rather, when the first hole 101H is punched along the height direction, since the air pocket, which has a lower density than the electrolyte, tends to rise, it may be easier for the air pocket to escape from the first folding portion 101.

In this case, since the orientation in which the electrode assembly 1 is mounted with respect to the gravity direction after actual manufacturing may vary depending on the situation, the first hole 101H may be punched not only on an upper side of the first folding portion 101 but also on a lower side or on both the upper and lower sides.

According to another modification not illustrated, the first gripper 31 may be driven to move along a front-rear direction from a first position on a front side or a rear side of the first folding portion 101 to a second position in which the first electrode 11 is disposed. For example, the first gripper 31 does not necessarily need to be driven to move along the width direction, but may be driven to move along the front-rear direction.

In this case, the first gripper 31 may be driven to move from the first position to the second position in a state in which the first punching unit 310 is not protruding or is less protruded so as not to interfere with the separator 10, and the first hole 101H may be punched as the first punching unit 310 further protrudes in the first width direction after the first gripper 31 has moved to the second position.

At this time as well, the first hole 101H may be punched as the first punching unit 310 further protrudes in the height direction after the first gripper 31 has moved to the second position, and the first hole 101H may be punched not only on an upper side of the first folding portion 101 but also on a lower side or on both the upper and lower sides.

According to the present disclosure, as the first gripper 31 and/or the second gripper 32 forms a first hole 101H and/or a second hole 102H from an inner side of the first folding portion 101 and/or the second folding portion 102, accurate punching may be performed at an end portion of the first folding portion 101 and/or the second folding portion 102, which is bent and thus not easy to punch accurately, and burrs that may be formed by the punching may be formed toward an outer side, thereby making air escape more easily, and stable punching may be achieved by receiving a reaction force due to tension applied to the separator 10 during a supplying process of the separator 10.

Referring back to FIG. 5, the electrode assembly manufacturing method may further include a heat-pressing step S2 of heat-pressing the electrode assembly 1 in a height direction, after the stacking step S1, in a predetermined pressing area A on a plane of the electrode assembly 1.

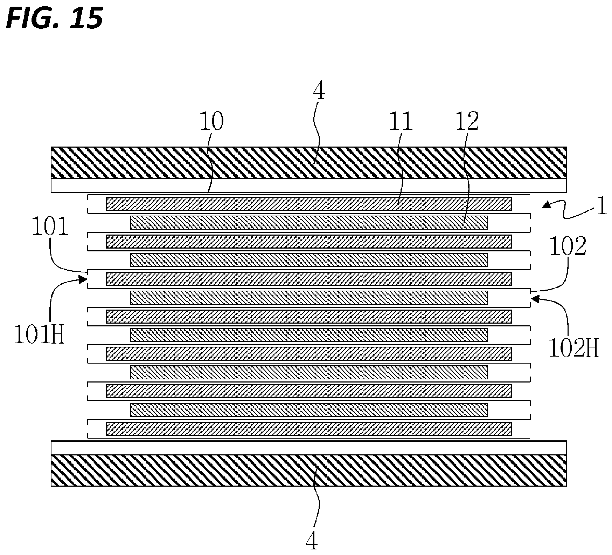

FIG. 15 illustrates a heat-pressing step according to an embodiment. Referring thereto, the electrode assembly manufacturing apparatus 1000 may further include a pair of heat-pressing units 4 configured to heat-press the electrode assembly 1 in the height direction, after completing stacking of the first electrodes 11 and the second electrodes 12, in the predetermined pressing area A on the plane of the electrode assembly 1. The heat-pressing units 4 may be provided to improve structural stability of the electrode assembly 1, increase efficiency of an electrochemical reaction, increase energy density, and suppress generation of an air pocket by improving impregnation of the electrolyte, by pressing and fixing the first electrodes 11, the second electrodes 12, and the separator 10 together in a stacking direction.

In this case, a fusible binder may be applied to surfaces of the first electrodes 11, the second electrodes 12, and/or the separator 10 so that the first electrodes 11, the second electrodes 12, and/or the separator 10 may be fixedly fusion-bonded to one another by the heat-pressing action of the heat-pressing units 4.

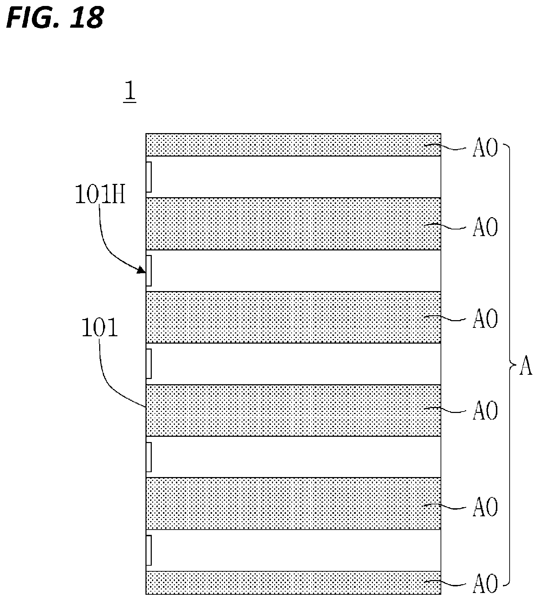

The pressing area A (e.g., see FIG. 18) preferably be set to avoid first holes 101H. This is because, when the pressing area A is formed in a region where the first holes 101H are formed, the first holes 101H may become narrowed or may even be blocked due to, for example, fusion-bonding between layers of the separator 10.

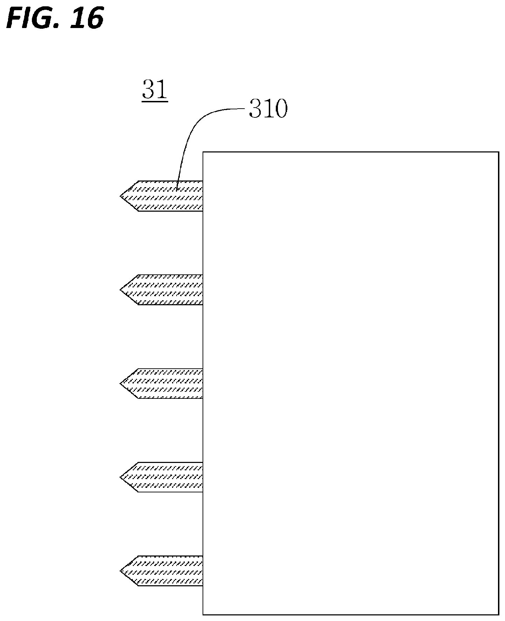

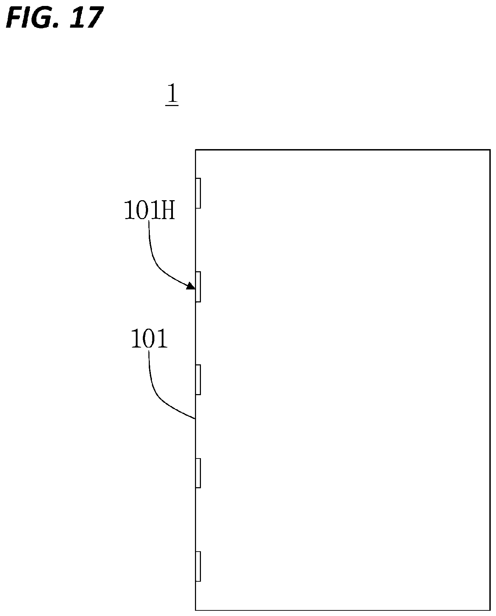

FIG. 16 illustrates a first gripper 31 according to an embodiment, and FIG. 17 illustrates a top view of an electrode assembly 1 after completion of a stacking step according to an embodiment. Referring to these drawings, first punching units 310 may have various shapes to punch first holes 101H by penetrating the first folding portion 101.

For example, the first punching units 310 may each have a blade shape, and accordingly, the first holes 101H may have a slit shape extending in a front-rear direction. However, the first punching units 310 may have various other structures, such as heating units configured to melt and punch the first folding portions 101, in addition to the shapes thereof.

FIG. 18 illustrates a pressing area A according to an embodiment. Referring thereto, the pressing area A according to an embodiment may include a plurality of unit pressing areas A0 extending in a width direction and arranged at intervals in a front-rear direction, and each first hole 101H may be interposed between each pair of adjacent unit pressing areas A0 in the front-rear direction. In other words, the pressing area A according to an embodiment may be formed in a stripe pattern arranged in a front-rear direction.

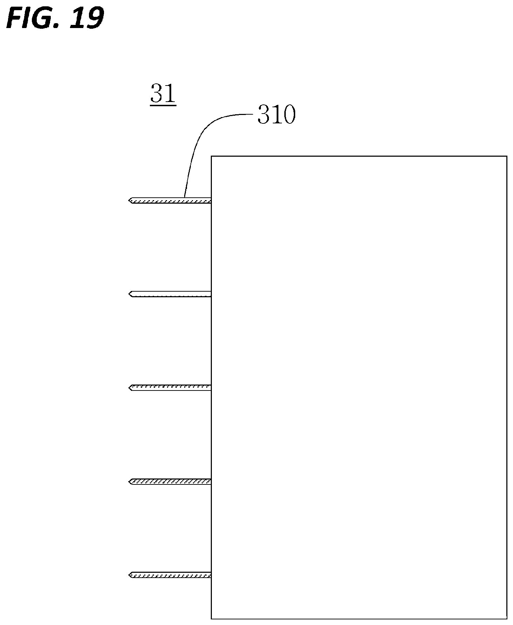

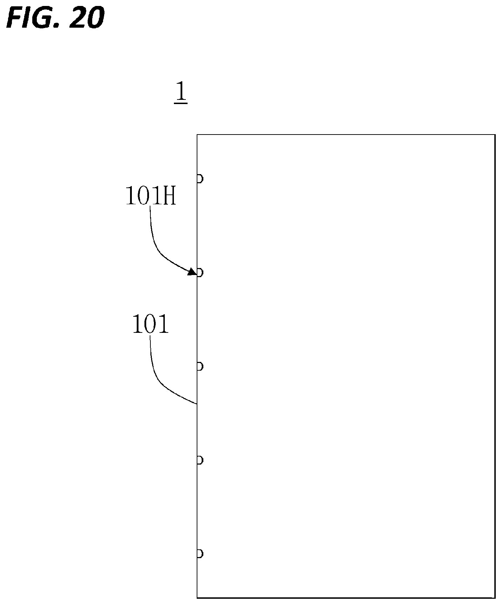

FIG. 19 illustrates a first gripper 31 according to a modification, and FIG. 20 illustrates a top view of an electrode assembly 1 after completion of a stacking step according to a modification. Referring to these drawings, the first punching units 310 may have a needle shape, and accordingly, first holes 101H may have a pinhole shape. However, the first punching units 310 may have various other structures, such as heating units configured to melt and punch the first folding portions 101, in addition to the shapes thereof.

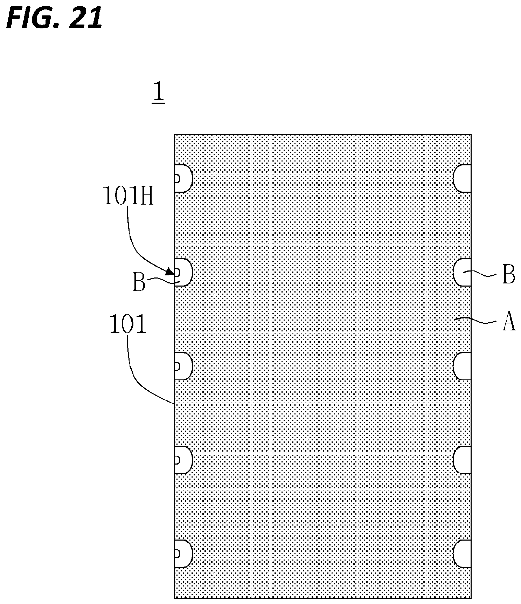

FIG. 21 illustrates a pressing area according to a modification. Referring thereto, in the pressing area A according to a modification, one or more non-pressing areas B having a shape surrounded by a closed curve may be provided. At this time, the first holes 101H may be located within the non-pressing areas B, respectively.

The above-described embodiments are to be understood as illustrative in all respects and not restrictive, and the scope of the present disclosure will be defined by the claims to be described below rather than by the foregoing detailed description. It may be interpreted that the meanings and scope of the claims to be described below, as well as all possible modifications and variations derived from equivalent concepts thereof, are included within the scope of the present disclosure.

Although the present disclosure has been described with reference to exemplary drawings as illustrated above, it is apparent that the present disclosure is not limited to the embodiments and drawings disclosed herein, and that various modifications may be made by those ordinarily skilled in the art within the spirit and scope of the present disclosure. Furthermore, even if operational effects according to the configuration of the present disclosure have not been explicitly described above in the course of describing the embodiments of the present disclosure, it is natural that predictable effects according to the configuration should also be considered to fall within the scope of the present disclosure.

## Claims

1. An apparatus for manufacturing an electrode assembly in which a first electrode and a second electrode are stacked between each pair of adjacent layers of a separator that is continuously supplied and folded in a zigzag manner at opposite sides in a width direction, the apparatus comprising:
a first gripper configured to convey and stack a first electrode onto the separator in a state in which a first folding portion is formed on a side of the separator in a first width direction, the first gripper comprising a first punching unit protruding in the first width direction and configured to punch one or more first holes arranged in a front-rear direction in the first folding portion.

2. The apparatus of claim 1, further comprising:
a second gripper configured to alternately operate with the first gripper, to convey and stack the second electrode onto the separator in a state in which a second folding portion is formed on a side of the separator in a second width direction, the second gripper comprising a second punching unit protruding in the second width direction and configured to punch one or more second holes arranged in the front-rear direction in the second folding portion.

3. The apparatus of claim 1, wherein the first gripper is driven to move from a first position to a second position in a state in which the first punching unit protrudes, and
wherein the one or more first holes are punched as the first gripper moves in a direction approaching the first folding portion.

4. The apparatus of claim 2, wherein the first gripper is driven to move from a first position to a second position in a state in which the first punching unit is not protruding or is less protruded, and
wherein the one or more first holes are punched as the first punching unit further protrudes in the first width direction after the first gripper has moved to the second position.

5. The apparatus of claim 2, wherein the first gripper is driven to move from a first position to a second position in a state in which the first punching unit is not protruding or is less protruded, and
wherein the one or more first holes are punched as the first punching unit further protrudes in a height direction after the first gripper has moved to the second position.

6. The apparatus of claim 5, wherein the one or more first holes are punched at an upper side, a lower side, or both upper and lower sides of the first folding portion.

7. The apparatus of claim 1, wherein the first gripper is driven to move from a first position at a front or rear side of the first folding portion to a second position where the first electrode is to be disposed, along the front-rear direction.

8. The apparatus of claim 7, wherein the first gripper is driven to move from the first position to the second position in a state in which the first punching unit is not protruding or is less protruded, and
wherein the one or more first holes are punched as the first punching unit further protrudes in the first width direction after the first gripper has moved to the second position.

9. The apparatus of claim 7, wherein the first gripper is driven to move from the first position to the second position in a state in which the first punching unit is not protruding or is less protruded, and
wherein the one or more first holes are punched as the first punching unit further protrudes in a height direction after the first gripper has moved to the second position.

10. The apparatus of claim 1, wherein the first punching unit includes a needle-shaped first punching unit, and
wherein the needle-shaped first punching unit forms the one or more first holes having a pinhole shape in the first folding portion.

11. The apparatus of claim 1, wherein the first punching unit includes a blade-shaped first punching unit, and
wherein the blade-shaped first punching unit forms the one or more first holes having a slit shape extending in the front-rear direction in the first folding portion.

12. The apparatus of claim 1, further comprising:
a pair of heat-pressing units configured to heat-press the electrode assembly in a height direction in a predetermined pressing area on a plane of the electrode assembly after stacking of the first electrode and the second electrode is completed,
wherein the pressing area is set to avoid the one or more first holes.

13. The apparatus of claim 12, wherein the pressing area includes a plurality of unit pressing areas extending in the width direction and arranged at intervals in the front-rear direction, and
wherein each of the one or more first holes is interposed in the front-rear direction between each pair of adjacent unit pressing areas.

14. The apparatus of claim 12, wherein one or more non-pressing areas having a shape surrounded by a closed curve are provided inside the pressing area, and
wherein the one or more first holes are located within the one or more non-pressing areas, respectively.

15. A method of manufacturing an electrode assembly in which a first electrode and a second electrode are stacked between each pair of adjacent layers of a separator that is continuously supplied and folded in a zigzag manner at opposite sides in a width direction, the method comprising a stacking step that repeatedly performs the following steps:
a first folding step of forming a first folding portion at a side of the separator in a first width direction;
a first stacking and punching step of conveying and stacking the first electrode onto the separator by a first gripper, and punching a first hole in the first folding portion by a first punching unit protruding from the first gripper;
a second folding step of forming a second folding portion at a side of the separator in a second width direction; and
a second stacking and punching step of conveying and stacking the second electrode onto the separator by a second gripper, and punching a second hole in the second folding portion by a second punching unit protruding from the second gripper.

16. The method of claim 15, wherein, in at least one of the first stacking and punching step and the second stacking and punching step, the stacking and the punching are performed simultaneously.

17. The method of claim 15, wherein, in at least one of the first stacking and punching step and the second stacking and punching step, the punching is performed after the stacking.

18. The method of claim 15, further comprising:
a heat-pressing step of heat-pressing the stacked electrode assembly in a predetermined pressing area on a plane of the electrode assembly in a height direction after the stacking step,
wherein the pressing area is set to avoid the first hole and the second hole.

19. An electrode assembly in which a first electrode and a second electrode stacked between each pair of adjacent layers of a separator folded in a zigzag manner comprising:
one or more first holes arranged in a front-rear direction in a first folding portion formed at a side of the separator in a first width direction; and
one or more second holes arranged in the front-rear direction in a second folding portion formed at a side of the separator in a second width direction.

20. The electrode assembly of claim 19, wherein the first electrode is a positive electrode, and the second electrode is a negative electrode.
